# FASCICULE DE BREVET EUROPEEN

(11) **EP 0 795 390 B1**
(45) Date de publication et mention de la délivrance du brevet: **07.01.1999**
(21) Numéro de dépôt: 97400503.5
(22) Date de dépôt: 05.03.1997
(51) Int. Cl.: B29C 49/24, B65D 23/08

(54) **Récipient comportant une étiquette decorative et procédé d'obtention de ce récipient**
Behälter mit einem dekorativen Etikett und Verfahren zu dessen Herstellung
Container comprising a decorative label and method for producing this container

(30) Priorité: 15.03.1996 FR 9603311
(43) Date de publication de la demande: 17.09.1997
(73) Titulaire: L'OREAL, 75008 Paris (FR)
(72) Inventeur: Baudin, Gilles, 95330 Domont (FR)
(74) Mandataire: Boulard, Denis

(56) Documents cités:
- WO-A-94/26498
- DE-A- 1 604 577
- FR-A- 2 607 432
- PATENT ABSTRACTS OF JAPAN vol. 94, no. 011 & JP 06 328547 A (OJI YUKA SYNTHETIC PAPER CO LTD), 29 Novembre 1994,
- PATENT ABSTRACTS OF JAPAN vol. 010, no. 211 (M-501), 24 Juillet 1986 & JP 61 051322 A (TOYODA GOSEI CO LTD;OTHERS: 02), 13 Mars 1986,
- PATENT ABSTRACTS OF JAPAN vol. 014, no. 378 (M-1011), 15 Août 1990 & JP 02 139327 A (HIROSHI UENO), 29 Mai 1990,

## Description

La présente invention se rapporte à un récipient, en particulier thermoplastique, muni d'une étiquette décorative. Ce récipient est notamment un récipient à col destiné à contenir un produit à distribuer, l'étiquette servant à identifier le produit ou ses propriétés, et/ou à indiquer le mode d'emploi du produit. Ce récipient peut être utilisé dans les domaines cosmétique, agro-alimentaire, dermatologique, ménager ou de peinture.

Plus particulièrement, le récipient visé par l'invention, est un flacon, un flacon-tube ou un tube, dont le corps comporte une ou plusieurs surfaces non développables. De manière générale, par le terme non développable on entend toute surface que l'on ne peut pas développer sur un plan sans déchirure, ni duplicature. Habituellement, les récipients de ce genre sont obtenus par extrusion ou injection d'une paraison, et par soufflage de cette dernière à la température de fusion du matériau la constituant, dans un moule approprié.

De façon classique, il est aisé de fixer sur des récipients à surface développable ayant une forme cylindrique, une étiquette décorative par simple collage, par exemple en utilisant une étiquette auto-adhésive en papier, préalablement décorée à plat. Cet étiquetage constitue une étape supplémentaire à la fabrication du récipient, compliquant cette dernière.

Depuis une vingtaine d'années, un procédé combiné de soufflage d'un flacon avec étiquetage simultané a été développé, consistant à déposer dans un moule ouvrant approprié, et en regard l'une de l'autre, une paraison et une étiquette en papier ou en matériau plastique. Ce procédé est connu sous le terme de 〈〈 *IML* 〉〉 (*In Mould Labeling)*). Après le soufflage de la paraison, et avant démoulage, l'étiquette se trouve soudée sur une surface externe du récipient final. Ce procédé combiné constitue une amélioration par rapport au collage de l'étiquette en dehors du moule, car le récipient décoré peut être obtenu en une seule étape. Un autre avantage réside dans le fait que l'étiquette peut être en matériau plastique, pratiquement inaltérable. De ce fait, lors de l'utilisation du produit introduit dans le récipient, l'étiquette ne peut ni être abîmée ni décollée suite à l'action de l'humidité ou de résidus de produit coulant sur l'étiquette par inadvertance de l'utilisateur. De plus, ce procédé permet d'obtenir un ensemble à surface parfaitement lisse, notamment dans les zones de jonction entre les bords de l'étiquette et le corps du récipient : en d'autres termes, l'étiquette est 〈〈 encastrée 〉〉 dans la paroi du récipient.

Le procédé *IML* présente cependant l'inconvénient majeur de n'être applicable qu'à la décoration de récipients à surfaces développables. En effet, lorsqu'il s'agit d'un récipient dont le corps comporte une surface non développable à courbure complexe, par exemple des zones concaves et convexes, ni le dépôt d'une étiquette auto-adhésive, ni l'application du procédé *IML* ne sont possibles avec les étiquettes actuellement utilisées, sans formation de plis, sans déchirure de l'étiquette et/ou sans formation de cloques d'air peu esthétiques entre la surface externe du récipient et l'étiquette. Cet effet est d'autant plus gênant lorsque l'étiquette est en partie transparente.

Pour parfaire l'accrochage de l'étiquette et pour éviter la formation de cloques d'air entre la surface externe d'un flacon à surface non développable et l'étiquette, il est envisagé par le document WO-A-88 08361 de réaliser des aspérités dans le moule destinées à laisser échapper l'air entre l'étiquette et la surface externe du flacon. Simultanément, une sous-pression est appliquée. Ce procédé présente l'inconvénient, d'une part, d'être compliqué et coûteux, et, d'autre part, de produire un flacon peu esthétique, du fait des aspérités visibles sur l'étiquette.

La présente invention a pour but de fabriquer un récipient selon le procédé IML connu tout en conservant ses avantages, et l'adaptant notamment aux récipients non cylindriques et en évitant tous les inconvénients de l'art antérieur. Aussi, l'invention propose un récipient plus économique que les récipients de l'art antérieur et son procédé d'obtention plus simple que celui décrit dans le document WO-A-88 08361.

En outre, par le document DE-A-1 604 577, on connaît une étiquette en plastique, comportant des moyens d'évacuation d'air, destinée à être fixée sur un récipient en plastique soufflé. Ces moyens sont réalisés sous forme de perforations ou de stries. Les récipients visés dans ce document sont à surface développable. La température de fusion de la matière de l'étiquette est égale ou inférieure à la température de fusion de la matière constituant le récipient. Dans ces conditions, une application de l'étiquette sur une surface non développable d'un récipient n'est pas possible sans détérioration de l'étiquette, pendant le thermoformage du récipient final.

La présente invention est relative à un récipient thermoplastique, ainsi qu'à son procédé d'obtention, ce récipient ayant un corps, constitué d'un premier matériau thermoplastique, de surface externe non développable munie d'au moins une étiquette décorative constituée d'au moins une couche en un second matériau thermoplastique et comportant des moyens d'évacuation d'air. Un tel récipient est connu du document WO-A-88 08361. Selon l'invention, le second matériau présente une température de fusion supérieure à la température de fusion du premier matériau.

Les moyens d'évacuation d'air peuvent être constitués par au moins une perforation, et de préférence une multitude de perforations, la densité desdites perforations étant, en particulier, inférieure à 10 perforations/cm².

De façon avantageuse, l'épaisseur de l'étiquette est d'environ 50 µm à environ 300 µm, et de préférence de 80 µm à 120 µm. En pratique, cette épaisseur est choisie en fonction de la courbure de l'endroit du corps du récipient où l'étiquette doit être posée ou en fonction de la température de fusion du second matériau.

Cette étiquette peut être opaque ou transparente. Avantageusement, elle a été décorée préalablement, par exemple par sérigraphie, offset ou héliographie.

Avantageusement, la zone perméable à l'air de l'étiquette peut être micro-perforée. A cet effet, l'étiquette peut être pourvu d'un ou plusieurs perforations dont le diamètre est compris dans la gamme allant de 0,05 mm à 0,5 mm. Ces perforations peuvent être réalisées mécaniquement, par décharge électrique ou par perçage au laser. Elles sont reparties avantageusement de façon régulière sur toute la surface de l'étiquette.

Il est possible également d'utiliser une étiquette thermoplastique comportant des micro-rainures sur la surface destinée à adhérer au récipient, ces micro-rainures servant à évacuer l'air entre l'étiquette et le corps du récipient lors du soufflage de ce dernier.

Selon une autre possibilité, l'étiquette peut être constituée d'une couche mince en matériau non-tissé perméable à l'air, réalisée en fibres thermoplastiques.

Avantageusement, le premier matériau thermoplastique est choisi parmi le polypropylène, le polyéthylène ou le polyéthylène téréphthalate, etc., permettant de fabriquer le récipient par soufflage d'une paraison dans un moule approprié. Cette technique de soufflage permet d'obtenir des récipients dont le corps présente une surface complexe, non développable, pouvant comporter des zones concaves ou convexes, notamment des zones concaves de courbure progressive.

L'étiquette, quant à elle, est constituée d'une feuille mince par le second matériau thermoplastique, qui peut être compatible ou non avec le matériau formant le corps du récipient et est, notamment, apte à adhérer, par soudage thermique, au corps du récipient lors de son thermoformage. Le second matériau est choisi, par exemple, parmi le polyéthylène, polypropylène, etc.. L'étiquette peut être réalisée de façon monocouche ou multicouche.

Lorsque les premier et second matériaux sont incompatibles entre eux, il est avantageux de prévoir une enduction d'un troisième matériau thermoplastique ou thermoréactif sur une face de l'étiquette pour former la liaison avec le corps du récipient. Dans ce cas, le troisième matériau peut être choisi parmi les matériaux semblables ou voisins du premier matériau du corps du récipient, ou parmi les adhésifs thermoréactifs compatibles avec le premier matériau.

L'utilisation d'une étiquette thermosoudable et perméable à l'air permet la fabrication du récipient décoré par le procédé *IML* sur un seul outillage.

Aussi, l'invention a encore pour objet un procédé de fabrication d'un récipient muni d'une étiquette, consistant à effectuer les étapes suivantes :
- placer à l'intérieur d'un moule ouvrant approprié une paraison constituée d'un premier matériau thermoplastique, ladite paraison étant à une température supérieure à la température de fusion de ce premier matériau ;
- placer dans le moule, en regard de la paraison, au moins une étiquette perméable à l'air constituée d'au moins une couche en un second matériau thermoplastique, le second matériau présentant une température de fusion supérieure à la température de fusion du premier matériau ;
- souffler la paraison jusqu'à l'obtention d'un corps de récipient de surface non développable et thermosoudage de l'étiquette sur la surface externe de ce corps, et
- démouler le récipient muni de l'étiquette, après refroidissement.

Ce procédé est bien adapté à des récipients à surface non développable, mais peut, bien entendu, être aussi utilisé pour des récipients à surface développable.

Grâce à la perméabilité à l'air de l'étiquette, l'air présent entre la surface du corps de récipient et l'étiquette peut s'échapper, permettant ainsi d'éviter l'inclusion de bulles d'air entre l'étiquette et la surface du corps.

Lorsque, contrairement à l'invention, on utilise une étiquette non perméable à l'air, on obtient de nombreux plis et/ou des cloques d'air entre l'étiquette et le corps du récipient, notamment dans des zones de faible courbure. Un tel récipient est inesthétique et mal accepté par le consommateur.

L'étiquette peut être constituée d'une pluralité de couches thermoplastiques, l'une d'entre elles formant une couche substrat. Dans ce cas, le matériau formant la couche substrat doit présenter une température de fusion supérieure à la température de fusion du premier matériau qui forme le corps.

Puisque, selon l'invention, le second matériau constituant l'étiquette présente une température de fusion supérieure à la température de fusion du premier matériau constituant le corps du récipient, à la température de soufflage la paraison se trouve dans un état plus ou moins liquide, permettant au premier matériau de subir une expansion jusqu'à la paroi interne du moule pour effectuer un thermosoudage avec l'étiquette. En outre, la température de fusion du second matériau inférieure à la température de soufflage de la paraison (P) dans le moule, le second matériau reste suffisamment solide pour éviter la déformation totale de l'étiquette, tout en étant suffisamment déformable pour permettre son adaptation à la forme du moule, et son adhésion à la forme du corps de récipient final, après soufflage. Ainsi, l'étiquette ramollie est apte à épouser les surfaces non développables du récipient, sans formation de plis, sans déchirure de l'étiquette et sans formation de cloques d'air peu esthétiques, entre la surface externe du récipient et l'étiquette.

Pour mieux faire comprendre la présente invention, on va décrire maintenant, à titre d'exemple purement illustratif et nullement limitatif, un mode de réalisation d'un flacon-tube conforme à l'invention, représenté sur les dessins annexés.
La figure 1 représente une vue en élévation d'un flacon conforme à l'invention comportant une étiquette micro-perforée.
La figure 2 représente une vue en perspective d'un demi-moule adapté au flacon de la figure 1, cette figure montrant une étiquette et une paraison avant soufflage du flacon.
La figure 3 représente une vue en coupe selon le plan III-III de la figure 2, illustrant l'opération de thermosoudage de l'étiquette sur le flacon.

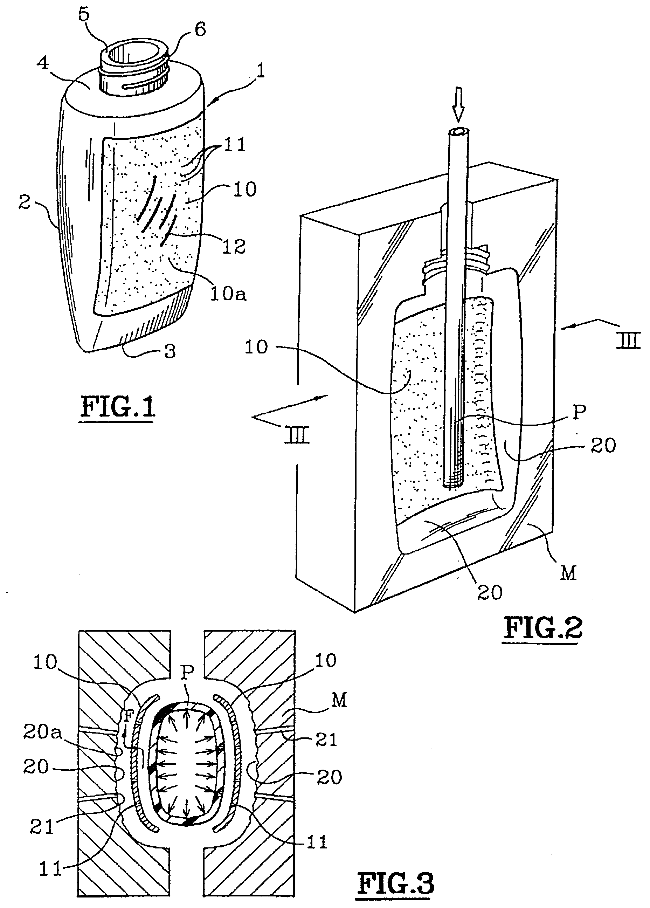

Sur la figure 1, on a représenté un récipient conforme à l'invention sous forme de flacon-tube 1. Ce flacon tube comporte un corps 2 non cylindrique de forme aplatie dont une première extrémité est constituée par un fond arrondi 3. Une seconde extrémité, opposée à la première, est pourvue d'un épaulement 4, lui même raccordé à un goulot 5, de section inférieure à la section du corps 2, muni d'un filetage extérieur 6 destiné à recevoir un bouchon (non représenté). Le corps 2 est constitué d'un matériau thermoplastique tel que du polyethylène.

Le flacon-tube 1 comporte au moins une étiquette imprimée 10, posée sur le corps 2, cette étiquette comportant un décor 12, par exemple un logo ou un mode d'emploi du produit destiné à remplir le flacon 2. L'étiquette 10 est constituée d'une feuille en polyoléfine monocouche tel que du polyéthylène ou multicouche de polyéthylène et de polypropylène, l'épaisseur de l'étiquette 10 étant d'environ 0,1 mm. Le cas échéant, la feuille est transparente. L'étiquette 10 est pourvu, sur au moins une partie, d'une micro-perforation, constituée par une multitude de trous minuscules 11. En pratique, la taille des trous 11 est choisie de sorte qu'ils sont à peine visible à l'oeil nu, de façon à modifier le moins possible l'esthétique et les inscriptions du décor 12 de l'étiquette. Avantageusement la taille des trous est comprise dans la gamme allant de 0,05 mm à 0,5 mm environ.

A titre d'exemple, le corps est constitué d'un mélange de polyéthylène basse densité (50%) et de polyéthylène haute densité (50%), dont la température de fusion est d'environ 120°C. L'étiquette, quant à elle, est constituée d'une couche unique en polypropylène (préalablement imprimée), dont la température de fusion est de 160°C. La paraison est introduite dans le moule à une température d'environ 190°C.

Les zones de transition 10a entre l'étiquette 10 et le corps 2 du flacon sont à peine sensible ; l'étiquette se trouve « encastrée » dans la paroi du flacon.

La fabrication du flacon-tube 2 avec l'étiquette 10 est effectuée de la façon suivante.

Comme représenté sur la figure 2, on introduit à chaud une paraison P creuse dans un moule ouvrant M. Ce moule comporte une concavité interne 20 à surface dépolie 20a, correspondant à la forme finale externe du flacon 2. Dans la concavité 20 est placée une étiquette 10 à micro-perforations 11 telle décrite précédemment, préalablement imprimée. L'étiquette 10 est maintenu en place dans la concavité 20 par aspiration. A cet effet, la concavité 20 comporte des orifices d'aspiration 21 (voir figure 3) communiquant avec un générateur de sous-pression (non représenté).

En soufflant de l'air comprimé dans la paraison P, celle-ci se dilate et épouse les parois de la concavité 20. Lors de cette opération, la surface externe de la paraison plaque l'étiquette 10 contre la paroi interne 20a du moule. Selon l'invention, grâce à la micro-perforation, l'étiquette épouse parfaitement le corps 2 du flacon et la paroi interne du moule M, sans apparition de cloques d'air ou de plis entre le corps 2 et l'étiquette 10.

La figure 3, montre l'étiquette 10 placée contre la paroi interne dépoli 20a du moule M, où elle est maintenue par aspiration. On voit que l'air, qui se trouve entre la paraison P et l'étiquette 10, peut s'échapper, lors de l'expansion de la paraison, au travers des perforations 11 de l'étiquette, comme représente schématiquement par la flèche F. Cet air est acheminé par la suite vers le générateur de sous-pression via le dépolissage 20a du moule et les orifices d'aspiration 21.

Le matériau de la paraison P à l'état chaud se soude alors à l'étiquette. Après refroidissement et démoulage du flacon-tube 1 final, aucune formation de plis, ni de cloques d'air n'est observée entre l'étiquette 10 et le corps 2. Un examen tactile relève, en outre, qu'aucun bord de transition n'est sensible entre l'étiquette et le corps.

## Revendications

1. Récipient (1) ayant un corps (2), constitué d'un premier matériau thermoplastique, de surface externe non développable munie d'au moins une étiquette décorative (10) constituée d'au moins une couche en un second matériau thermoplastique et comportant des moyens d'évacuation d'air, caractérisé en ce que le second matériau présente une température de fusion supérieure à la température de fusion du premier matériau.

2. Récipient selon la revendication 1, caractérisé en ce que le corps (2) est obtenu par soufflage d'une paraison (P) dans un moule (M) approprié.

3. Récipient selon la revendication 1 ou 2, caractérisé en ce que les moyens d'évacuation d'air sont constitués par une micro-perforation d'au moins une partie de l'étiquette (10).

4. Récipient selon la revendication 1 ou 2, caractérisé en ce que les moyens d'évacuation d'air sont constitués par une étiquette (10) en un matériau non-tissé constitué de fibres.

5. Récipient selon la revendication 1 à 3, caractérisé en ce que l'étiquette (10) comporte au moins une perforation dont le diamètre est compris entre 0,05 mm et 0,5 mm.

6. Récipient selon la revendication 5, caractérisé en ce que l'étiquette comporte une multitude de perforations, la densité desdites perforations étant inférieure à 10 perforations/cm².

7. Récipient selon l'une des revendications précédentes, caractérisé en ce que l'étiquette (10) présente une épaisseur d'environ 50 µm à environ 300 µm.

8. Récipient selon l'une des revendications précédentes, caractérisé en ce que l'étiquette (10) présente une épaisseur d'environ 80 µm à environ 120 µm.

9. Récipient selon l'une des revendications précédentes, caractérisé en ce que ladite étiquette (10) comporte une pluralité de couches thermoplastiques, dont l'une forme une couche substrat, la température de fusion du matériau formant ladite couche substrat étant supérieure à la température de fusion du premier matériau.

10. Procédé de fabrication d'un récipient (1) à surface externe non développable munie d'une étiquette décorative (10) consistant à effectuer les étapes suivantes :
- placer à l'intérieur (20) d'un moule ouvrant (M) approprié une paraison (P) constituée d'un premier matériau thermoplastique, ladite paraison étant à une température supérieure à la température de fusion de ce premier matériau ;
- placer dans le moule (M), en regard de la paraison (P), au moins une étiquette (10) perméable à l'air, constituée d'au moins une couche en un second matériau thermoplastique, le second matériau présentant une température de fusion supérieure à la température de fusion du premier matériau ;
- souffler la paraison (P) jusqu'à l'obtention d'un corps (2) de récipient de surface non développable (1) et thermosoudage de l'étiquette (10) sur la surface externe de ce corps, et
- démouler le récipient (1) muni de l'étiquette, après refroidissement.

11. Procédé selon la revendication 10, caractérisé en ce que les moyens d'évacuation d'air sont constitués par une micro-perforation d'au moins une partie de l'étiquette (10).

12. Procédé selon l'une des revendications 10 ou 11, caractérisé en ce que l'étiquette comporte une multitude de perforation, la densité desdites perforations étant inférieure à 10 perforations/cm².

13. Procédé selon l'une des revendications 10 à 12, caractérisé en ce que l'étiquette (10) comporte au moins une perforation dont le diamètre est compris entre 0,05 mm et 0,5 mm.

14. Procédé selon l'une des revendications 10 à 13, caractérisé en ce que les moyens d'évacuation d'air sont constitués par une étiquette (10) en un matériau non-tissé constitué de fibres thermoplastiques.

15. Procédé selon l'une des revendications 10 à 14, caractérisé en ce que l'étiquette (10) présente une épaisseur d'environ 50 µm à environ 300 µm.

16. Procédé selon l'une des revendications 10 à 15, caractérisé en ce que l'étiquette (10) présente une épaisseur d'environ 80 µm à environ 120 µm.

## Claims

1. Container (1) which has a body (2) made of a first thermoplastic, the external surface of which cannot be developed and is equipped with at least one decorative label (10) made of at least one layer of a second thermoplastic and comprising means of removing air, characterized in that this second material has a melting point which is higher than the melting point of the first material.

2. Container according to Claim 1, characterized in that the body (2) is obtained by blowing a paraison (P) in an appropriate mould (M).

3. Container according to Claim 1 or 2, characterized in that the means of removing air consist of a micro-perforation of at least part of the label (10).

4. Container according to Claim 1 or 2, characterized in that the means of removing air consist of a label (10) made of a non-woven material made up of fibres.

5. Container according to Claim 1 to 3, characterized in that the label (10) has at least one perforation, the diameter of which is between 0.05 mm and 0.5 mm.

6. Container according to Claim 5, characterized in that the label has a number of perforations, the density of the said perforations being below 10 perforations/cm².

7. Container according to one of the preceding claims, characterized in that the label (10) has a thickness of about 50 µm to about 300 µm.

8. Container according to one of the preceding claims, characterized in that the label (10) has a thickness of about 80 µm to about 120 µm.

9. Container according to one of the preceding claims, characterized in that the said label (10) has a number of thermoplastic layers, one of which forms a substrate layer, the melting point of the material forming the said substrate layer being higher than the melting point of the first material.

10. Method for manufacturing a container (1) with an external surface that cannot be developed and is equipped with a decorative label (10), this method consisting in performing the following steps:
- placing inside (20) an appropriate openable mould (M) a paraison (P) made of a first thermoplastic, the said paraison being at a temperature which is higher than the melting point of this first material;
- placing in the mould (M), facing the paraison (P), at least one air-permeable label (10) made of at least one layer of a second thermoplastic, this second material having a melting point which is higher than the melting point of the first material;
- blowing the paraison (P) until a container body (2) with a non-developable surface (1) is obtained and the label (10) has thermally welded itself to the external surface of this body, and
- releasing the labelled container (1) from the mould, after cooling.

11. Method according to Claim 10, characterized in that the means of removing air consist of a micro-perforation of at least part of the label (10).

12. Method according to either of Claims 10 and 11, characterized in that the label has a number of perforations, the density of the said perforations being below 10 perforations/cm².

13. Method according to one of Claims 10 to 12, characterized in that the label (10) has at least one perforation, the diameter of which is between 0.05 mm and 0.5 mm.

14. Method according to one of Claims 10 to 13, characterized in that the means of removing air consist of a label (10) made of a non-woven material made up of thermoplastic fibres.

15. Method according to one of Claims 10 to 14, characterized in that the label (10) has a thickness of about 50 µm to about 300 µm.

16. Method according to one of Claims 10 to 15, characterized in that the label (10) has a thickness of about 80 µm to about 120 µm.

## Patentansprüche

1. Behälter (1) mit einem Körper (2), der aus einem ersten thermoplastischen Material mit einer nicht ausdehnbaren Außenfläche besteht, die mit mindestens einem dekorativen Etikett (10) versehen ist, das aus mindestens einer Schicht aus einem zweiten thermoplastischen Material besteht und Vorrichtungen zur Luftabführung aufweist, dadurch gekennzeichnet, daß das zweite Material eine höhere Schmelztemperatur als das erste Material aufweist.

2. Behälter nach Anspruch 1, dadurch gekennzeichnet, daß der Körper (2) durch Blasformen eines Vorformlings (P) in einer geeigneten Gußform (M) hergestelt wird.

3. Behälter nach Anspruch 1 oder 2, dadurch gekennzeichnet, daß die Vorrichtungen zur Luftabführung aus einer Mikro-Perforation mindestens eines Teils des Etiketts (10) bestehen.

4. Behälter nach Anspruch 1 oder 2, dadurch gekennzeichnet, daß die Vorrichtungen zur Luftabführung aus einem Etikett (10) aus einem nichtgewebten Material besteht, das aus Fasern besteht.

5. Behälter nach Anspruch 1 bis 3, dadurch gekennzeichnet, daß das Etikett (10) mindestens eine Perforation aufweist, deren Durchmesser 0,05 bis 0,5 mm beträgt.

6. Behälter nach Anspruch 5, dadurch gekennzeichnet, daß das Etikett eine Mehrzahl von Perforationen aufweist, wobei die Dichte dieser Perforationen unter 10 Perforationen pro Quadratzentimeter liegt.

7. Behälter nach einem der vorstehenden Ansprüche, dadurch gekennzeichnet, daß das Etikett (10) eine Stärke von etwa 50 bis etwa 300 µm aufweist.

8. Behälter nach einem der vorstehenden Ansprüche, dadurch gekennzeichnet, daß das Etikett (10) eine Stärke von etwa 80 bis etwa 120 µm aufweist.

9. Behälter nach einem der vorstehenden Ansprüche, dadurch gekennzeichnet, daß das Etikett (10) eine Mehrzahl thermoplastischer Schichten aufweist, von denen eine eine Substratschicht bildet, wobei die Schmelztemperatur des Materials, das diese Schicht bildet, höher ist als die Schmelztemperatur des ersten Materials.

10. Herstellungsverfahren für einen Behälter (1) mit nicht ausdehnbarer Außenfläche, die mit einem dekorativen Etikett (10) versehen ist, das in der Durchführung folgender Schritte besteht:
- Anordnen eines Vorformlings (P) im Inneren (20) einer Gußform (M) zum Öffnen, welcher Vorformling aus einem ersten thermoplastischen Material besteht und dessen Temperatur höher ist als die Schmelztemperatur dieses ersten Materials;
- Anordnen mindestens eines luftdurchlässigen Etiketts (10) in der Gußform (M) gegenüber dem Vorformling (P), welches Etikett aus mindestens einer Schicht aus einem zweiten thermoplastischen Material besteht, welches zweite Material eine höhere Schmelztemperatur als das erste Material aufweist;
- Blasformen des Vorformlings (P) bis zum Erhalt eines Behälterkörpers (2) mit nicht ausdehnbarer Oberfläche (1) und Thermoschweißen des Etiketts (10) auf die Außenfläche dieses Körpers, und
- nach dem Abkühlen Lösen des mit dem Etikett versehenen Behälters (1) aus der Form.

11. Verfahren nach Anspruch 10, dadurch gekennzeichnet, daß die Vorrichtungen zur Luftabführung aus einer Mikro-Perforation mindestens eines Teils des Etiketts (10) besteht.

12. Verfahren nach einem der Ansprüche 10 oder 11, dadurch gekennzeichnet, daß das Etikett eine Mehrzahl von Perforationen aufweist, wobei die Dichte dieser Perforationen unter 10 Perforationen pro Quadratzentimeter liegt.

13. Verfahren nach einem der Ansprüche 10 bis 12, dadurch gekennzeichnet, daß das Etikett (10) mindestens eine Perforation aufweist, deren Durchmesser 0,05 bis 0,5 mm beträgt.

14. Verfahren nach einem der Ansprüche 10 bis 13, dadurch gekennzeichnet, daß die Vorrichtungen zur Luftabführung aus einem Etikett (10) aus einem nichtgewebten Material bestehen, das aus thermoplastischen Fasern besteht.

15. Verfahren nach einem der Ansprüche 10 bis 14, dadurch gekennzeichnet, daß das Etikett (10) eine Stärke von etwa 50 bis etwa 300 µm aufweist.

16. Verfahren nach einem der Ansprüche 10 bis 15, dadurch gekennzeichnet, daß das Etikett (10) eine Stärke von etwa 80 bis etwa 120 µm aufweist.
